# DEMANDE DE BREVET EUROPEEN

(11) **EP 1 782 940 A1**
(43) Date de publication de la demande: **09.05.2007**
(21) Numéro de dépôt: 06291726.5
(22) Date de dépôt: 07.11.2006
(51) Int. Cl.: B29C 51/32, B60R 5/04

(54) **Procédé et dispositif de réalisation d'une coque thermoformée permettant de réaliser des découpes non linéaires de la périphérie de ladite coque, et coque ainsi réalisée**

(30) Priorité: 08.11.2005 FR 0553381
(71) Demandeur: Centre d'etude et de recherche pour l'automobile (CERA), 51100 Reims (FR)
(72) Inventeur: Bonhomme, Patrick, 51500 Tassy (FR); Julien, Guy, 71210 Torcy (FR)
(74) Mandataire: Sayettat, Julien Christian

(57) **Abrégé**

L'invention concerne un procédé de réalisation d'une coque (1) thermoformée, ladite coque comprenant un fond (2), un bord périphérique (3) et un rabattement supérieur (4), comprenant les étapes suivantes :
• prévoir un moule (5) comprenant une cuve (6) et un poinçon (7) de forme complémentaire, la périphérie supérieure dudit poinçon formant un pan incliné (13),
• prévoir un flan (8),
• disposer la périphérie dudit flan dans un serre-flan (9) et chauffer ledit flan,
• thermoformer ledit flan en plaquant, le pourtour dudit flan contre la périphérie supérieure dudit poinçon,
• appliquer au moins une lame (11) contre ledit flan, un espace (12) étant prévu derrière ledit flan de sorte à détourer le flan thermoformé.
L'invention concerne également le dispositif de réalisation de la coque et la coque réalisée.

## Description

L'invention concerne un procédé de réalisation d'une coque thermoformée, un dispositif de réalisation d'une telle coque, une coque réalisée par un tel procédé et un composant, notamment de véhicule automobile, comprenant une telle coque.

Il est connu de mettre en oeuvre un procédé de réalisation d'une coque thermoformée, ladite coque comprenant un fond, un bord périphérique et un rabattement supérieur interne, ledit procédé comprenant les étapes suivantes :
- prévoir un moule de thermoformage comprenant une cuve et un poinçon de forme complémentaire, définissant ledit fond et ledit bord périphérique, la périphérie supérieure dudit poinçon formant un pan incliné définissant ledit rabattement,
- prévoir un flan de matériau apte à être thermoformé,
- disposer la périphérie dudit flan dans un serre-flan et chauffer ledit flan à sa température de thermoformage,
- thermoformer ledit flan entre ledit poinçon et ladite cuve en plaquant, au moyen d'au moins un sabot de placage, le pourtour dudit flan contre la périphérie supérieure dudit poinçon,
- appliquer au moins une lame contre ledit flan en périphérie dudit sabot, de sorte à détourer le flan thermoformé, ladite lame prenant appui sur un billot,
- retirer ledit sabot et ledit poinçon et démouler la coque obtenue.

On obtient par un tel procédé une coque thermoformée, par exemple à base de feutre, comprenant un rabattement supérieur interne, c'est à dire un rabattement tourné vers la zone centrale de la coque.

Une telle coque peut alors être, par exemple, disposée contre une coque complémentaire pourvue ou non d'un rabattement, l'espace entre les coques étant rempli d'un matériau tel qu'une mousse de polyuréthane. On obtient ainsi un composant, tel qu'une tablette arrière de véhicule automobile, sur lequel le rabattement réalisé permet d'assurer une finition périphérique satisfaisante.

Le procédé de réalisation d'une coque tel que décrit ci-dessus présente l'inconvénient, dans l'étape de détourage, de requérir de très fortes pressions à appliquer sur la/les lames. En effet, la lame, pour pouvoir assurer une découpe satisfaisante, doit présenter un tranchant rectiligne, de sorte à être intégralement en appui contre le billot en fin de découpe, et doit être appliquée très fortement contre le flan. Cela implique l'utilisation de dispositifs de haute puissance, permettant par exemple de pouvoir appliquer 10 tonnes/mètre de lame, pour parvenir à effectuer la découpe recherchée.

En outre, le procédé décrit ci-dessus est difficilement applicable à des découpes non rectilignes, notamment en raison de l'ajustement difficile à obtenir entre la lame et le billot pour de telles découpes. De telles découpes doivent donc être réalisées en reprise, après retrait de la coque du moule de thermoformage, ce qui entraîne une complexité de réalisation et des surcoûts.

L'invention a pour but de pallier ces inconvénients en proposant un procédé dans lequel l'étape de détourage peut être intégralement réalisée alors que la coque est toujours dans le moule de thermoformage, en utilisant un dispositif à la fois simple et de faible puissance permettant de réaliser des découpes non rectilignes en évitant l'utilisation du billot de l'art antérieur.

A cet effet, et selon un premier aspect, l'invention propose un procédé de réalisation d'une coque thermoformée, ladite coque comprenant un fond, un bord périphérique et un rabattement supérieur interne, ledit procédé comprenant les étapes suivantes :
- prévoir un moule de thermoformage comprenant une cuve et un poinçon de forme complémentaire, définissant respectivement ledit fond et ledit bord périphérique, la périphérie supérieure dudit poinçon formant un pan incliné définissant ledit rabattement,
- prévoir un flan de matériau apte à être thermoformé,
- disposer la périphérie dudit flan dans un serre-flan et chauffer ledit flan à sa température de thermoformage,
- thermoformer ledit flan entre ledit poinçon et ladite cuve en plaquant, au moyen d'au moins un sabot de placage, le pourtour dudit flan contre la périphérie supérieure dudit poinçon, de sorte à réaliser une tension dudit flan entre ledit serre-flan et ledit sabot,
- appliquer au moins une lame contre ledit flan en périphérie dudit sabot, un espace étant prévu derrière ledit flan et au-dessus du pan incliné à l'opposé de ladite lame, de sorte à détourer le flan thermoformé,
- retirer ledit sabot et ledit poinçon et démouler la coque obtenue.

Un tel procédé, du fait notamment de la suppression du billot usuellement utilisé, la découpe se faisant ici par un effet de « lame sur matériau mis en tension », permet d'effectuer la découpe avec une pression limitée et de réaliser des découpes non linéaires, par exemple au niveau des coins de la coque, le problème de l'ajustement lame/billot étant inexistant.

Selon un deuxième aspect, l'invention propose un dispositif de réalisation d'une telle coque à partir d'un flan apte à être thermoformé, comprenant :
- un moule de thermoformage comprenant une cuve et un poinçon de forme complémentaire, définissant le fond et le bord périphérique de la coque, la périphérie supérieure dudit poinçon formant un pan incliné définissant le rabattement de la coque,
- un serre-flan correspondant à la périphérie de ladite cuve,
- au moins un sabot de placage du pourtour dudit flan contre la périphérie supérieure dudit poinçon,
- au moins une lame disposée en périphérie dudit sabot, ladite lame étant montée mobile selon un plan sensiblement horizontal, un espace étant prévu derrière ledit flan, lorsqu'il est positionné dans ledit dispositif, et au-dessus du pan incliné à l'opposé de ladite lame de sorte à lui permettre de s'engager au delà dudit flan.

Selon un troisième aspect, l'invention propose une coque réalisée par un tel procédé, ladite coque présentant un rabattement sur au moins une zone non linéaire, voire sur toute sa périphérie.

Selon un quatrième aspect, l'invention propose un composant, notamment de véhicule automobile, comprenant au moins une telle coque. Un tel composant peut par exemple être une tablette arrière de véhicule automobile.

D'autres particularités et avantages de l'invention apparaîtront dans la description qui suit, faite en référence aux figures jointes dans lesquelles :
- la figure 1 est une vue en coupe partielle schématique d'un dispositif de réalisation d'une coque par un procédé selon l'invention, le flan étant disposé, après chauffage, en regard du moule de thermoformage,
- la figure 2 est une vue en coupe partielle schématique du dispositif de la figure 1 pendant l'étape de thermoformage,
- la figure 3 est une vue schématique en perspective partielle d'une coque réalisée au moyen du dispositif des figures 1 et 2.

On notera que dans cette description, les termes de positionnement dans l'espace (supérieur, horizontal,...) sont pris en référence à la coque telle que positionnée lors de sa réalisation selon le mode de réalisation décrit dans la suite de ce descriptif.

On décrit à présent un procédé de réalisation d'une coque thermoformée 1, représentée en figure 3. la coque 1 comprend un fond 2, un bord périphérique 3 et un rabattement supérieur interne 4. Par rabattement interne, on entend un retour vers le centre de la coque, comme représenté sur la figure 3.

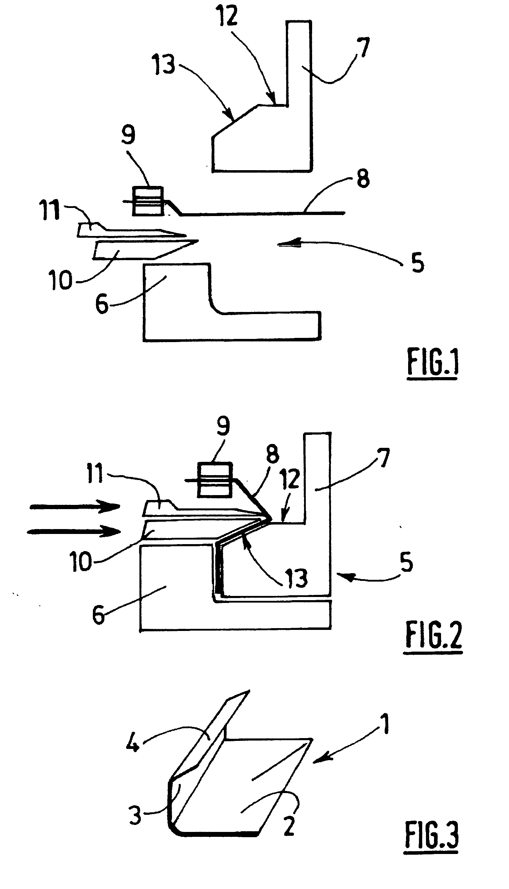

Le procédé de réalisation d'une telle coque 1 comprend les étapes suivantes, décrites en référence aux figures 1 à 3 :
- prévoir un moule de thermoformage 5 comprenant une cuve 6 et un poinçon 7 de forme complémentaire, définissant respectivement le fond 2 et le bord périphérique 3, la périphérie supérieure dudit poinçon formant un pan incliné 13 définissant le rabattement 4,
- prévoir un flan 8 de matériau apte à être thermoformé,
- disposer la périphérie dudit flan dans un serre-flan 9 et chauffer ledit flan à sa température de thermoformage,
- thermoformer ledit flan entre ledit poinçon et ladite cuve en plaquant, au moyen d'au moins un sabot de placage 10 (selon la flèche horizontale inférieure), le pourtour dudit flan contre la périphérie supérieure dudit poinçon, de sorte à réaliser une tension dudit flan entre ledit serre-flan et ledit sabot,
- appliquer une lame 11 (selon la flèche horizontale supérieure) en périphérie dudit sabot, un espace 12 étant prévu derrière ledit flan et au-dessus du pan incliné 13 à l'opposé de ladite lame, de sorte à détourer le flan thermoformé,
- retirer ledit sabot et ledit poinçon et démouler la coque 1 obtenue.

L'utilisation d'un tel procédé permet, du fait de la tension appliquée au flan 8 avant son détourage, et de l'existence d'un espace 12, à la place d'un billot, d'appliquer une pression limitée sur la lame 11 pour obtenir la découpe attendue.

Selon une réalisation, le détourage du flan 8 est réalisé après son refroidissement, ce qui permet d'assurer une tension optimale dudit flan, favorable à une découpe efficace.

Comme on le voit, un dispositif de réalisation d'une coque à partir d'un flan 8 de matériau apte à être thermoformé et selon un tel procédé comprend :
- un moule de thermoformage 5 comprenant une cuve 6 et un poinçon 7 de forme complémentaire, définissant le fond 2 et le bord périphérique 3 de la coque, la périphérie supérieure dudit poinçon formant un pan incliné 13 définissant le rabattement 4 de la coque,
- un serre-flan 9 correspondant à la périphérie de ladite cuve,
- au moins un sabot 10 de placage du pourtour dudit flan contre la périphérie supérieure dudit poinçon,
- au moins une lame 11 disposée en périphérie dudit sabot, ladite lame étant montée mobile selon un plan sensiblement horizontal, un espace 12 étant prévu derrière ledit flan, lorsqu'il est disposé dans le dispositif, et au-dessus du pan incliné 13 à l'opposé de ladite lame de sorte à lui permettre de s'engager au delà dudit flan.

Par « plan horizontal », on entend un plan sensiblement parallèle au plan général de fond de cuve 2.

Selon une réalisation, la lame 11 est crantée, ce qui permet d'assurer la découpe attendue en appliquant une pression minime.

La coque ainsi réalisée peut être utilisée par exemple pour former la tablette arrière d'un véhicule automobile.

## Revendications

1. Procédé de réalisation d'une coque (1) thermoformée, ladite coque comprenant un fond (2), un bord périphérique (3) et un rabattement supérieur interne (4), ledit procédé comprenant les étapes suivantes :
• prévoir un moule (5) de thermoformage comprenant une cuve (6) et un poinçon (7) de forme complémentaire, définissant respectivement ledit fond et ledit bord périphérique, la périphérie supérieure dudit poinçon formant un pan incliné (13) définissant ledit rabattement,
• prévoir un flan (8) de matériau apte à être thermoformé,
• disposer la périphérie dudit flan dans un serre-flan (9) et chauffer ledit flan à sa température de thermoformage,
• thermoformer ledit flan entre ledit poinçon et ladite cuve en plaquant, au moyen d'au moins un sabot de placage (10), le pourtour dudit flan contre la périphérie supérieure dudit poinçon, de sorte à réaliser une tension dudit flan entre ledit serre-flan et ledit sabot,
• appliquer au moins une lame (11) contre ledit flan en périphérie dudit sabot, un espace (12) étant prévu derrière ledit flan et au-dessus du pan incliné (13) à l'opposé de ladite lame, de sorte à détourer le flan thermoformé,
• retirer ledit sabot et ledit poinçon et démouler la coque (1) obtenue.

2. Dispositif de réalisation d'une coque (1) selon la revendication 1 à partir d'un flan (8) de matériau apte à être thermoformé, **caractérisé en ce qu'**il comprend :
• un moule de thermoformage (5) comprenant une cuve (6) et un poinçon (7) de forme complémentaire, définissant le fond (2) et le bord périphérique (3) de la coque (1), la périphérie supérieure dudit poinçon formant un pan incliné (13) définissant le rabattement de ladite coque,
• un serre-flan (9) correspondant à la périphérie de ladite cuve,
• au moins un sabot (10) de placage du pourtour dudit flan contre la périphérie supérieure dudit poinçon,
• au moins une lame (11) disposée en périphérie dudit sabot, ladite lame étant montée mobile selon un plan sensiblement horizontal, un espace (12) étant prévu derrière ledit flan, lorsqu'il est positionné dans ledit dispositif, et au-dessus du pan incliné (13) à l'opposé de ladite lame de sorte à lui permettre de s'engager au delà dudit flan.

3. Dispositif selon la revendication 2, **caractérisé en ce que** la lame (11) est crantée.

4. Coque (1) réalisée par un procédé selon la revendication 1, ladite coque présentant un rabattement sur au moins une zone non linéaire, voire sur toute sa périphérie.

5. Composant, notamment de véhicule automobile, comprenant au moins une coque (1) selon la revendication 4.
